# EUROPEAN PATENT SPECIFICATION

(11) **EP 3 772 184 B1**
(45) Date of publication and mention of the grant of the patent: **26.01.2022**
(21) Application number: 19189615.8
(22) Date of filing: 01.08.2019
(51) Int. Cl.: H04B 1/04, H04B 1/18, H04B 1/48

(54) **A TUNABLE MATCHING NETWORK FOR A TRANSCEIVER**
ABSTIMMBARES ANPASSUNGSNETZWERK FÜR EINEN SENDER-EMPFÄNGER
RÉSEAU D'ADAPTATION RÉGLABLE POUR UN ÉMETTEUR-RÉCEPTEUR

(43) Date of publication of application: 03.02.2021
(73) Proprietor: RENESAS ELECTRONICS CORP, Nakaharu-Ku Kawasaki, Kanagawa 211-8668 (JP); Stichting IMEC Nederland, 5656 AE Eindhoven (NL)
(72) Inventor: Minyoung, Song, 3001 Leuven (BE); Yao-Hong, Liu, 3001 Leuven (BE); XiaoYan, Wang, 3001 Leuven (BE); Kenichi, Shibata, 3001 Leuven (BE); Hisayasu, Sato, 3001 Leuven (BE)
(74) Representative: Roth, Sebastian

(56) References cited:
- EP-A1- 3 142 258
- US-A1- 2015 091 776
- US-B1- 10 141 971

## Description

### TECHNICAL FIELD

The present invention relates to the field of transceivers. More particularly, the present invention relates to a transceiver comprising a tunable matching network (TMN). The present invention provides the TMN, a transceiver front-end including the TNM, and a method for operating the TMN.

### BACKGROUND

A wireless device may generally include a wireless transceiver for transmitting and receiving data in a wireless communication system. For data transmission, the transceiver may modulate a radio frequency (RF) carrier signal with data to obtain a modulated signal, amplify the modulated signal to obtain an output RF signal having a desired output power level, and transmit the output RF signal via an antenna, for example, to another wireless device or base station. The transceiver may include various circuits for transmitting the data, including amplifiers, local oscillators, mixers, filters, etc.

For data reception, the transceiver may receive an RF signal via the antenna, amplify the received RF signal, and demodulate the amplified signal to decode or recover the data contained therein. The transceiver may further include various circuits for receiving data, such as amplifiers, filters, or demodulators. Some transceivers include a power amplifier (PA) in the transmit path and a low noise amplifier (LNA) in the receive path of the transceiver front-end, which are used for amplifying the transmitted and received signals, respectively.

Impedance matching is generally used to match the impedance of a source with the impedance of a load. As it is known, matching the impedance of the source and load enables the maximum amount of power to be transferred from the source to the load for a given signal.

Impedance matching networks in a transceiver are usually coupled between the antenna and the PA and LNA, in order to match the impedance of the antenna to the output impedance of the PA or to the input impedance of the LNA, respectively. The impedance matching networks increase the power efficiency of the transceiver, by enabling the maximum amount of power to be transferred between the antenna and the LNA in a receive (Rx) mode, or the PA and the antenna in a transmit (Tx) mode, for a given signal. However, antenna impedance matching presents particular difficulties in mobile devices, such as mobile handsets, due to the constantly changing environment in which such devices typically operate. The changing environment can result in large changes in the antenna impedance, which cause a fixed matching network to be ineffective in providing an optimum impedance match between e.g. the antenna and the front-end circuitry of a transceiver in the mobile device.

Moreover, wearable/implantable devices, e.g., heart-rate monitor straps and implanted wireless sensors need a fully integrated adaptive front-end with a TMN using low-power and fast impedance detection, since they consume ultra-low-power (ULP) and require robust and efficient operation.

Another challengeable issue is the antenna proximity effect, which can significantly degrade the antenna and front-end performance, and hence battery lifetime. In order to reduce the antenna impedance mismatch caused by the proximity effect, adaptive TMNs are required to improve the RF front-end performance. The impedance mismatch detection is crucial in such tuning systems in terms of tuning speed and power consumption.

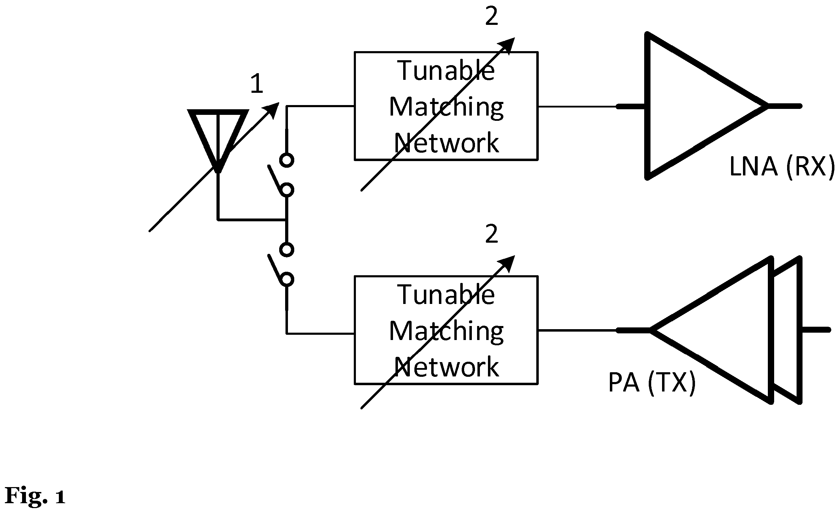

Fig. 1 shows an example of a transceiver comprising two TMNs and two switches: one TMN is connected in the transmit path, i.e. between antenna and transmitter, and the other TMN is connected in the receive path, i.e. between antenna and receiver (in particular between antenna and amplifiers of receiver and transmitter, respectively).

However, these TMNs shown in Fig. 1 have high losses due to the respective switches being located in the signal path. Moreover, the transceiver also disadvantageously has high manufacturing costs due to the use of two separate Tx/Rx TMNs, and due to the external components needed for implementing the switches.

Therefore, there is a need for improved impedance matching, in particular TMN, in/for a transceiver.

US 10 141 971 B1 discloses a TMN for a transceiver comprising a tunable bank in a shared part of a transceiver path and a receiver path.

### SUMMARY

In view of the above-mentioned problems and disadvantages, embodiments of the present invention aim to improve conventional impedance matching in a transceiver. In particular, an objective is to provide an improved TMN for a transceiver. The TMN should show reduced losses. Further, the TMN should lead to reduced manufacturing costs of the transceiver. The TMN should also be easily and precisely adjustable, in order to obtain the best possible impedance matching.

The objective is achieved by the embodiments provided in the enclosed independent claims. Advantageous implementations of the embodiments are further defined in the dependent claims.

According to a first aspect, the invention relates to a TMN for a transceiver, the TMN comprising an antenna port for connecting to an antenna, a receiver port for connecting to a receiver, and a transmitter port for connecting to a transmitter, a receive path to provide signals from the antenna port to the receiver port during a Rx mode, a transmit path to provide signals from the transmitter port to the antenna port during a Tx mode, a tunable bank comprising at least one tunable capacitor and being connected to the antenna port in a shared part of the receive path and the transmit path, an inductance connected in the transmit path between the tunable bank and the transmitter port, and a device configured to connect the inductance to ground in the Rx mode and to disconnect the inductance from ground in the Tx mode.

The TMN of the first aspect provides the advantage of reduced manufacturing and test costs for the transceiver. Moreover, the TMN provides the advantage of lower losses, since there are no switches necessary in the signal path. Furthermore, making use of only one TMN that is shared between the receive path and transmit path of the transceiver front-end (i.e. that is used both for matching the antenna to the receiver and the transmitter) has the advantage that the losses in the transceiver are minimized, and shrinkage of the impedance coverage in Rx mode is prevented.

In an implementation form of the TMN, the inductance is the only inductance included in the TMN.

This provides the advantage that inductive losses are minimized.

In another implementation form of the TMN, the tunable bank consists of the at least one tunable capacitor.

This provides the advantage that the tunable bank has a simple configuration.

In another implementation form of the TMN, the tunable bank consists of a tunable series capacitor and a tunable shunt capacitor.

This provides the advantage that the tunable bank has a simple configuration.

In another implementation form of the TMN, the tunable series capacitor is connected to the antenna port, and the tunable shunt capacitor is connected to ground and is arranged after the tunable series capacitor.

In another implementation form of the TMN, the tunable series capacitor and the tunable shunt capacitor are tunable independently from another.

This provides the advantage that the tunable series capacitor and the tunable shunt capacitor can be tuned in a flexible way without interfering with each other.

In another implementation form of the TMN, the device is located outside of the transmit path and the receive path, respectively.

This provides the advantage that losses are reduced.

In another implementation form of the TMN, in the Tx mode, the device provides a fringe capacitance between ground and the inductance.

In another implementation form of the TMN, the device is implemented by one of: a switch configured to connect the inductance to ground in the Rx mode; a capacitance for realizing a notch filter in the Rx mode: a balun with a capacitance, for realizing a notch filter in the Rx mode.

In particular, in case of the capacitance for realizing the notch filter, a switched or tunable capacitance can be used. If Rx mode and Tx mode can use the same capacitance value, also a fixed capacitance can be used.

In another implementation form of the TMN, the inductance is connected between the receiver port and the transmitter port.

According to a second aspect, the invention relates to a transceiver front-end, comprising a TMN according to the first aspect, a receiver connected to the receiver port of the TMN, and a transmitter connected to the transmitter port of the TMN.

In an implementation form of the transceiver front-end, in the Tx mode, the device is switched off, the transmitter is switched on, and the receiver is switched off; and in the Rx mode, the device is switched on, the transmitter is switched off, and the receiver is switched on.

In an implementation form of the transceiver front-end, the transmitter, the receiver, and the TMN are provided on an integrated circuit chip connectable to an antenna via the antenna port of the TMN.

According to a third aspect, the invention relates to a transceiver comprising a transceiver front-end according to the second aspect, and an antenna connected to the transceiver front-end via the antenna port of the TMN.

According to a fourth aspect, the invention relates to a method for operating a TMN, for a transceiver, the method comprising the steps of: providing signals over a receive path of the TMN from an antenna port to a receiver port during a Rx mode, providing signals over a transmit path of the TMN from a transmitter port to the antenna port during a Tx mode, tuning at least one tunable capacitor of a tunable bank of the TMN, which is connected to the antenna port in a shared part of the receive path and the transmit path, and operating a device to selectively connect an inductance, which is connected in the transmit path between the tunable bank and the transmitter port, to ground in the Rx mode and disconnect the inductance from ground in the Tx mode.

The method of the fourth aspect provides the same advantages as described above for the TMN of the first aspect. The method can have implementation forms corresponding to the implementation forms of the TMN of the first aspect.

### BRIEF DESCRIPTION OF DRAWINGS

The above described aspects and implementation forms of the present invention will be explained in the following description of specific embodiments in relation to the enclosed drawings, in which:
- FIG. 1: shows an example of a transceiver;
- Fig. 2: shows a transceiver comprising a TMN according to an embodiment;
- Fig. 3: shows different implementations of a device comprised in a TMN according to an embodiment;
- Fig. 4: shows a transceiver comprising a TMN according to an embodiment;
- Fig. 5: shows a transceiver comprising a TMN according to an embodiment;
- Fig. 6: shows impedance mapping for matching to an antenna (a), and matching to a transmitter and a receiver (b), in a transceiver comprising a TMN according to an embodiment;
- Fig. 7: shows a schematic representation of a measured impedance coverage using a TMN according to an embodiment; and
- Fig. 8: shows a schematic representation of a method for operating a TMN for a transceiver according to an embodiment.

### DETAILED DESCRIPTION OF EMBODIMENTS

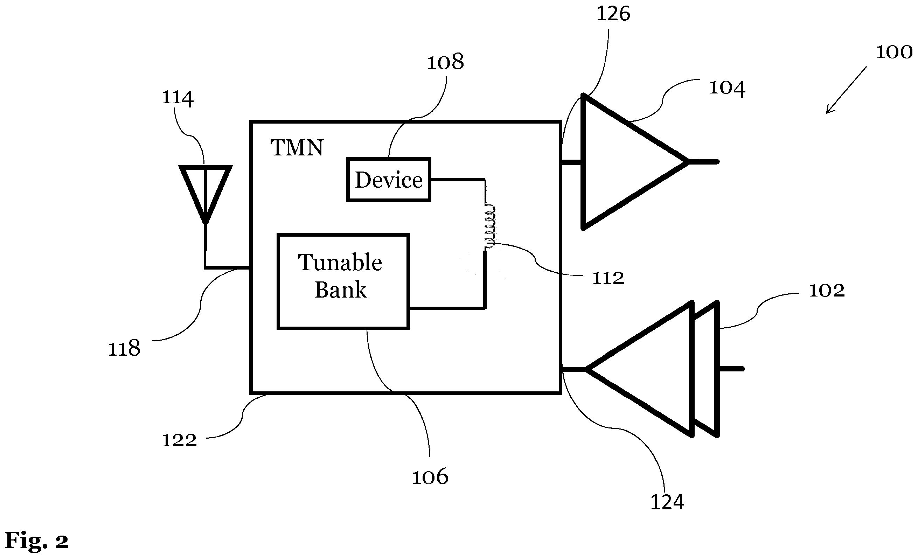

Fig. 2 shows a TMN 122 for a transceiver 100 according to an embodiment. The TMN 122 is shown particularly as it can be used in the transceiver 100 according to an embodiment. The transceiver 100 includes the TMN 122, and further includes a receiver 104 and a transmitter 102. Together, the TMN 122, the receiver 104 and the transmitter 102 form the transceiver's front-end. The transceiver 100 further includes an antenna 114.

The TMN 122 according to the embodiment comprises an antenna port 118 for connecting to the antenna 114, a receiver port 126 for connecting to the receiver 104, and a transmitter port 124 for connecting to the transmitter 102. The TMN 122 has a receive path to provide signals from the antenna port 118 to the receiver port 126 during an Rx mode, and has a transmit path to provide signals from the transmitter port 124 to the antenna port 118 during a Tx mode. Rx mode and Tx mode may relate to the TMN 122 and transceiver 100, respectively.

Moreover, the TMN 122 comprises a tunable bank 106 comprising at least one tunable capacitor 106a, 106b, and being connected to the antenna port 118 in a shared part of the receive path and the transmit path. Notably, the TMN 122 is generally shared for matching the impedance of the transmitter 102 and the receiver 104, respectively, to the impedance of the antenna 114.

Furthermore, the TMN 122 comprises an inductance 112 connected in the transmit path between the tunable bank 106 and the transmitter port. The TMN 122 also comprises a device 108 configured to connect the inductance 112 to ground in the Rx mode, and to disconnect the inductance 112 from ground in the Tx mode.

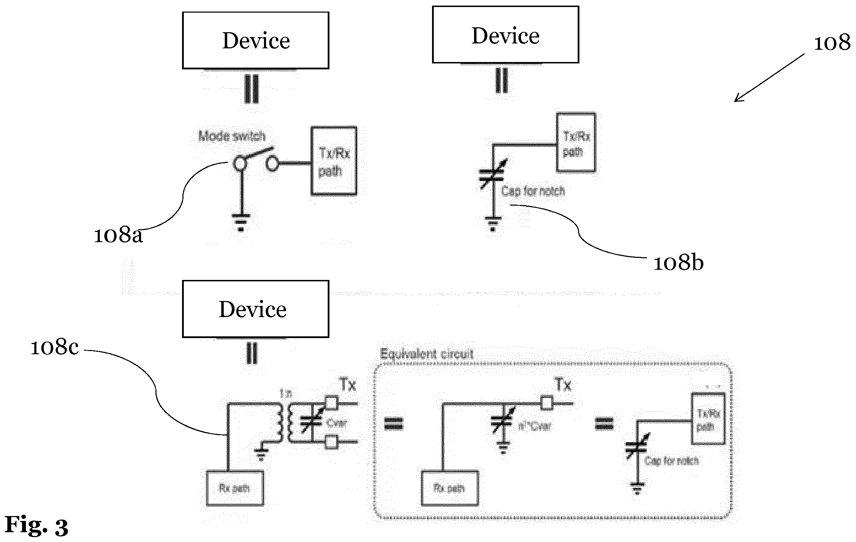

As shown in Fig. 3, the device 108 can be implemented by one of:
- a mode switch 108a configured to connect the inductance 112 to ground in the Rx mode; or
- a capacitance for a notch filter in the Rx mode 108b; or
- a balun with a capacitance for a notch filter in Rx mode (equivalent circuit) 108c.

The mode switch 108a can be big-sized, in order to ensure that the Q-factor of the TMN 122 is not degraded.

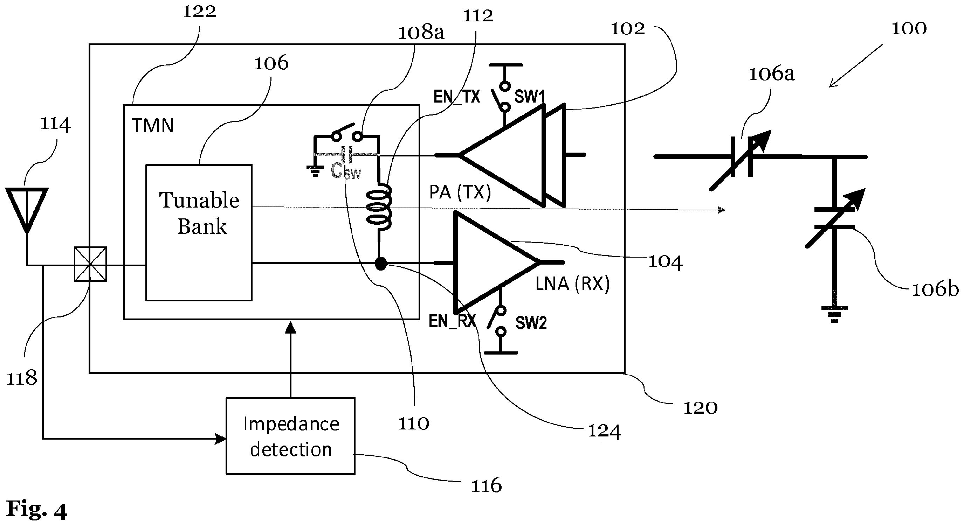

Fig. 4 shows a transceiver 100 according to an embodiment, which builds on the transceiver 100 shown in Fig. 1. Accordingly, the transceiver 100 of Fig. 4 comprises also the TMN 122 according to an embodiment.

In this embodiment of the transceiver 100, the antenna 114 is directly connected to an input/output (I/O) pin 118 (antenna port) of the transceiver's front-end 120. The transceiver front-end 120 may include various circuits configured to receive and transmit RF signals via the antenna 114.

In one embodiment, all circuitry used to implement the transceiver front-end 120 may be provided on a common semiconductor substrate, and/or as a monolithic integrated circuit (IC) chip. In another embodiment, one or more components of the transceiver front-end 120 may be provided on a separate substrate, which is coupled or bonded to the IC chip.

In the embodiment shown in FIG. 4, the transceiver front-end 120 includes a first amplifier (belonging to the receiver 104), a second amplifier (belonging to the transmitter 102), and the TMN 122.

The first amplifier of the receiver 104 is coupled within the receive path, and the second amplifier of the transmitter 102 is coupled within a transmit path of the transceiver front-end 120. The first amplifier is configured to amplify RF signals received by the antenna 114, for instance, from a wireless device or base station, during the Rx mode of the transceiver 100.

The second amplifier is configured to amplify RF signals to be transmitted from the antenna 114 to, for instance, another wireless device or base station, during the Tx mode of the transceiver 100. In an exemplary embodiment, the first amplifier of the receiver 104 is a LNA, and the second amplifier of the transmitter 102 is a PA. It is noted, however, that the first and second amplifiers are not strictly limited to LNAs and PAs, and may be implemented with other types of amplifiers in other embodiments.

In an embodiment, the transceiver front-end 120 is a time division duplex (TDD) transceiver front-end. In a TDD transceiver, the transmitter 102 and receiver 104 are not utilized simultaneously (i.e., Tx and Rx modes occur at different times). In order to conserve power in a TDD transceiver, the LNA may be powered down or turned off during the Tx mode, and the PA may be utilized to amply RF signals to be transmitted by the transceiver front-end 120. During the Rx mode, the PA may be powered down or turned off and the LNA may be utilized to amplify RF signals received by the transceiver front-end 120.

As shown in FIG. 4, the TMN 122 may be coupled between the antenna 114 and a shared node 124, to which the first amplifier and the second amplifier are connected. More specifically, the TMN 122 may be directly connected to the I/O pin 118, and may be directly connected to the shared node 124, where "directly connected" means that no intervening circuit components are coupled between the recited components.

Avoiding the use of a transmit/receive switch in the transceiver front-end 120 improves the signal quality and decreases the cost and area consumption of the transceiver 100 compared to a transceiver that makes use of such switches, as shown in Fig. 1.

Another advantage over the transceiver shown in Fig. 1 is that the transceiver front-end 120 of the transceiver 100 shown in FIG. 4 may include a single, shared, on-chip TMN 122 to provide the impedance transformations desired during the Rx and Tx modes.

In a general embodiment, the TMN 122 may include a plurality of reactive elements (e.g., inductors and/or capacitors), which are configured to transform the impedance of the antenna 114 into a desired resistance (R) at the shared node 124.

In order to provide the impedance transformations desired during the Rx and Tx modes, the plurality of reactive elements may generally include at least one variable reactive element having a tunable reactance (or a tunable susceptance), which is reconfigurable to modify the resistance (R) provided at the shared node 124.

By adjusting the reactance (or susceptance) of the at least one variable reactive element, the TMN 122 shared by the first amplifier and the second amplifier may be reconfigured to: (a) transform the impedance of the antenna 114 into a desired resistance (RLNA) at the input of the first amplifier during the Rx mode, and (b) transform the impedance of the antenna 114 into a desired resistance (RPA) at the output of the second amplifier during the Tx mode.

The desired resistance (RLNA) at the input of the first amplifier, the desired resistance (RPA) at the output of the second amplifier, and the configuration of the TMN 122 may depend on circuitry and operating characteristics of the first amplifier and/or the second amplifier.

In general, the at least one variable reactive element may be selected from a group consisting of variable capacitors and/or variable inductors (otherwise referred to as tunable capacitors and/or tunable inductors). In one embodiment, the at least one variable reactive element is implemented as a variable capacitor, and more specifically, as a digitally controlled capacitor array.

In Fig. 4, the TMN 122 comprises the tunable bank 106, the device 108, and the inductance 112. The tunable bank 106 can consist of at least one tunable capacitor 106a, 106b, wherein the tunable capacitors 106a, 106b can be tuned by the impedance detection unit 116. In particular, the tunable bank 106 can consist of a tunable series capacitor 106a and a tunable shunt capacitor 106b, wherein the tunable series capacitor 106a is connected to the antenna port 118, and the tunable shunt capacitor 106b is connected to ground and is arranged after the tunable series capacitor 106a. In one embodiment, the tunable series capacitor 106a and the tunable shunt capacitor 106b are tunable independently from another.

In an embodiment, the inductance 112 may be the only inductance 112 included in the TMN 122, and the inductance 112 may be connected between the receiver port 126 and the transmitter port 124.

Moreover, in another embodiment, the device 108 may be located outside of the transmit path and the receive path, respectively, and in the Tx mode, the device may provide a fringe capacitance 110 between ground and the inductance 108.

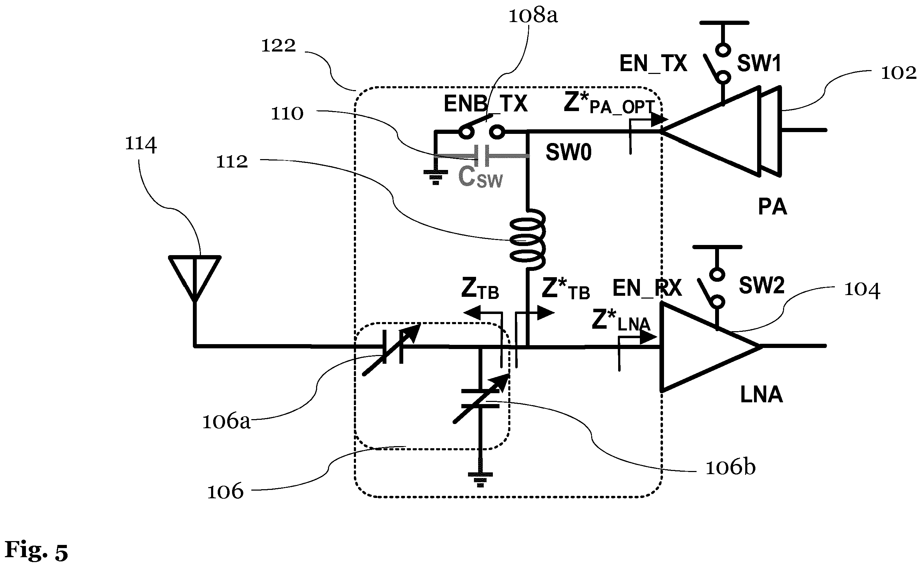

Fig. 5 shows a transceiver 100 comprising a TMN 122 according to an embodiment, which builds on the embodiments of the transceivers 100 and TMNs 122 shown in Fig. 2 and Fig. 4, respectively.

As mentioned in the background section, to interface conventionally from an antenna to a transceiver front-end, an antenna switch is employed to connect to both the matching networks of the transmitter and the receiver separately, as it is shown in Fig. 1. However, this approach introduces additional loss and increases area. Instead, in the embodiments of the present invention, a merged Tx/Rx matching network, i.e. the TMN 122, directly interfaces to the antenna 114 which, advantageously, can avoid such antenna switch.

In order to further reduce the area of the transceiver 100, embodiments of the present invention may comprise a single-inductor topology, as shown in Fig. 5. The merged Tx/Rx TMN 122 in this case may have a mode switch (SWo) 108a, which is located outside of the signal path, so that the signal loss is dramatically reduced.

In one embodiment, in order to minimize the signal loss and to prevent the shrinkage of the impedance coverage in the Rx mode, the SWo 108a has a big size, ensuring that the Q-factor of the matching network 122 is not degraded. In addition, the SWo 108a can work as a fringe capacitor (CSW) 110 in the Tx mode, which constitutes part of the TMN 122 and saves an additional capacitor.

The tunability of the proposed TMN 122 is provided by the (shared) tunable bank (TB) 106, comprising a series capacitor (CSE) 106a and a shunt (CSH) capacitor 106b.

Advantageously, in the proposed matching topology, with only one on-chip inductor 112, the area and the loss of the TMN 122 are minimized.

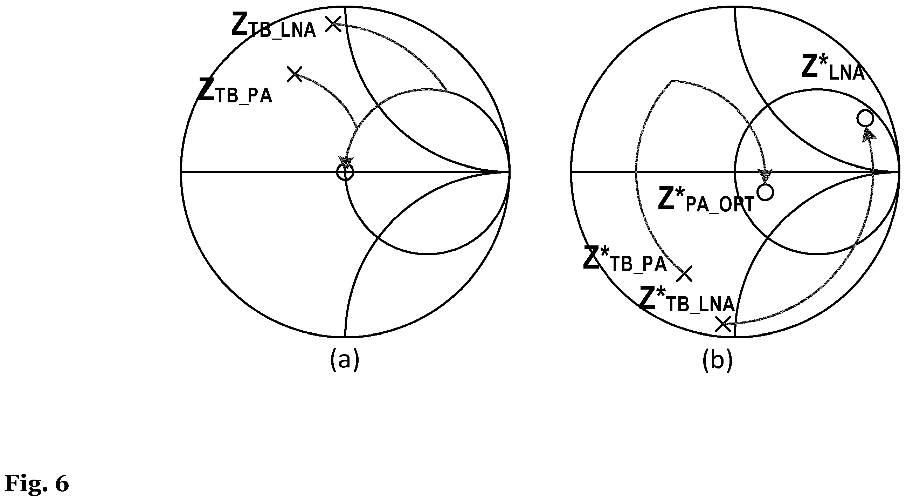

By targeting the typical impedance area of pattern antennas and selecting the impedance seen from the TB 106 to the PA and the LNA (Z^{∗}TB_PA and Z^{∗}TB_LNA) in the capacitive region, a wide impedance coverage can be achieved with a capacitive only TB 106 and a single inductor 112, as illustrated in Fig. 6. Fig. 6 shows particularly impedance mapping for matching to the antenna 114 (a), and for matching to the transmitter 102 and receiver 104 (b), in a transceiver 100 comprising the TMN 122 according to an embodiment.

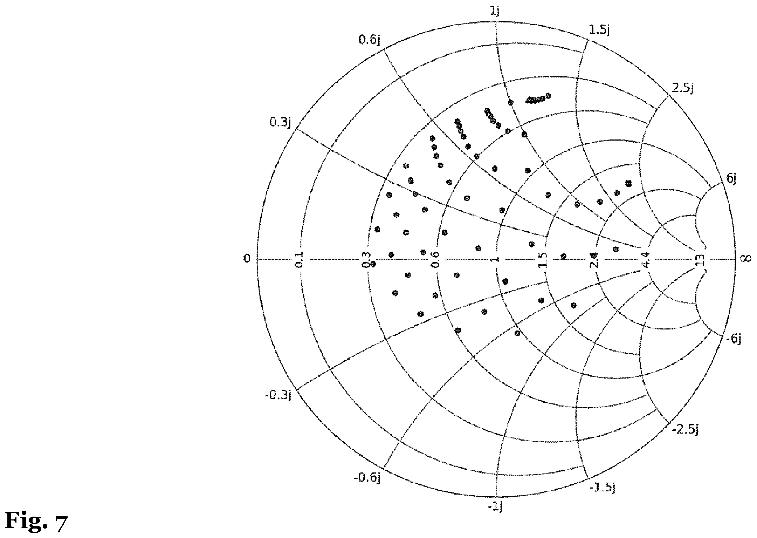

Moreover, Fig. 7 shows a schematic representation of a measured impedance coverage according to an embodiment.

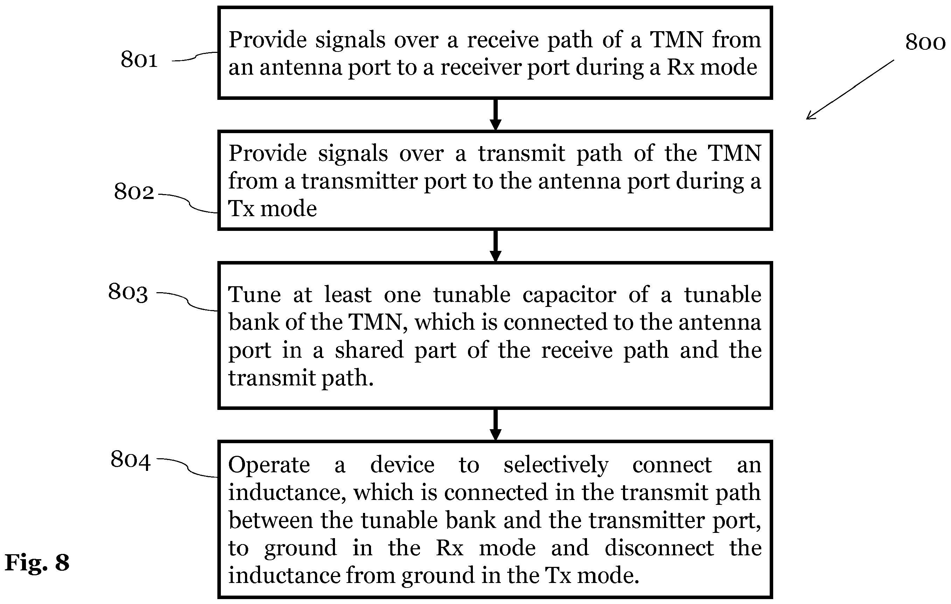

Fig. 8 shows a schematic representation of a method 800 for operating a TMN 122 for a transceiver (or transceiver front-end 120) according to an embodiment.

The method 800 comprises the following steps:
- Providing 801 signals over a receive path of the TMN 122 from an antenna port 118 to a receiver port 126 during a Rx mode,
- Providing 802 signals over a transmit path of the TMN 122 from a transmitter port to the antenna port 118 during a Tx mode.
- Tuning 803 at least one tunable capacitor 106a, 106b of a tunable bank 106 of the TMN 122, which is connected to the antenna port 118 in a shared part of the receive path and the transmit path.
- Operating 804 a device 108 to selectively connect an inductance 112, which is connected in the transmit path between the tunable bank 106 and the transmitter port, to ground in the Rx mode and disconnect the inductance 112 from ground in the Tx mode.

The present invention has been described in conjunction with various embodiments, as examples, as well as aspects and implementations. However, other variations can be understood and effected by those skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality.

## Claims

1. A tunable matching network (122), TMN, for a transceiver, the TMN (122) comprising:
- an antenna port (118) for connecting to an antenna (114), a receiver port (126) for connecting to a receiver (104), and a transmitter port (124) for connecting to a transmitter (102),
- a receive path to provide signals from the antenna port (118) to the receiver port (126) during a receive, Rx, mode,
- a transmit path to provide signals from the transmitter port (124) to the antenna port (118) during a transmit, Tx, mode, and
- a tunable bank (106) comprising at least one tunable capacitor (106a, 106b) and being connected to the antenna port (118) in a shared part of the receive path and the transmit path, **characterised by**
- an inductance (112) connected in the transmit path between the tunable bank (106) and the transmitter port (124), and
- a device (108) configured to connect the inductance (112) to ground in the Rx mode and to disconnect the inductance (112) from ground in the Tx mode.

2. The TMN (122) of claim 1, wherein:
the inductance (112) is the only inductance included in the TMN (122).

3. The TMN (122) of claim 1 or 2, wherein:
the tunable bank (106) consists of the at least one tunable capacitor (106a, 106b).

4. The TMN (122) of any one of the preceding claims, wherein:
the tunable bank (106) consists of a tunable series capacitor (106a) and a tunable shunt capacitor (106b).

5. The TMN (122) of claim 4, wherein:
the tunable series capacitor (106a) is connected to the antenna port (118), and
the tunable shunt capacitor (106b) is connected to ground and is arranged after the tunable series capacitor (106a).

6. The TMN (122) of claim 4 or 5, wherein:
the tunable series capacitor (106a) and the tunable shunt capacitor (106b) are configured to be tunable
independently from another.

7. The TMN (122) of any one of the preceding claims, wherein:
the device (108) is located outside of the transmit path and the receive path, respectively.

8. The TMN (122) of any one of the preceding claims, configured such that:
in the Tx mode, the device (108) provides a fringe capacitance (110) between ground and the inductance (112).

9. The TMN (122) of any one of the preceding claims, wherein:
the device (108) is comprised of one of
- a switch (108a) configured to connect the inductance (112) to ground in the Rx mode;
- a capacitance (108b) for realizing a notch filter in the Rx mode;
- a balun (108c) with a capacitance, for realizing a notch filter in the Rx mode.

10. The TMN (122) of any one of the preceding claims, wherein:
the inductance (112) is connected between the receiver port (126) and the transmitter port (124).

11. A transceiver front-end (120), comprising:
- a TMN (122) according to any one of the claims 1 to 10,
- a receiver (104) connected to the receiver port of the TMN (126), and
- a transmitter (102) connected to the transmitter port of the TMN (124).

12. The transceiver front-end (120) of claim 11, configured such that:
in the Tx mode, the device (108) is switched off, the transmitter (102) is switched on,
and the receiver (104) is switched off; and
in the Rx mode, the device (108) is switched on, the transmitter (102) is switched off,
and the receiver (104) is switched on.

13. The transceiver front-end (120) of claim 11 or 12, wherein:
the transmitter (102), the receiver (104), and the TMN (122) are provided on an integrated circuit chip connectable to an antenna (114) via the antenna port of the TMN (118).

14. A transceiver (100) comprising:
a transceiver front-end (120) according to any one of the claims 11 to 13, and
an antenna (114) connected to the transceiver front-end (120) via the antenna port of the TMN (118).

15. A method (800) for operating a tunable matching network, TMN (122), for a transceiver, the method (800) comprising the steps of:
- providing (802) signals over a receive path of the TMN from an antenna port (118) to a receiver port (126) during a receive, Rx, mode,
- providing (804) signals over a transmit path of the TMN from a transmitter port (124) to the antenna port (118) during a transmit, Tx, mode,
- tuning (806) at least one tunable capacitor (106a, 106b) of a tunable bank (106) of the TMN (122), which is connected to the antenna port (118) in a shared part of the receive path and the transmit path, and
- operating (808) a device (108) to selectively connect an inductance (112), which is connected in the transmit path between the tunable bank (106) and the transmitter port (124), to ground in the Rx mode and disconnect the inductance (112) from ground in the Tx mode.

## Patentansprüche

1. Abstimmbares Anpassungsnetzwerk (122) (TMN) für einen Transceiver, wobei das TMN (122) Folgendes umfasst:
- einen Antennenanschluss (118) zum Anschließen an eine Antenne (114), einen Empfängeranschluss (126) zum Anschließen an einen Empfänger (104), und einen Senderanschluss (124) zum Anschließen an einen Sender (102),
- einen Empfangspfad zur Bereitstellung von Signalen vom Antennenanschluss (118) an den Empfängeranschluss (126) während eines Empfangsmodus (Rx),
- einen Sendepfad zum Bereitstellen von Signalen vom Senderanschluss (124) an den Antennenanschluss (118) während eines Sendemodus (Tx) und
- eine abstimmbare Bank (106), die mindestens einen abstimmbaren Kondensator (106a, 106b) umfasst und mit dem Antennenanschluss (118) in einem gemeinsamen Teil des Empfangspfads und des Sendepfads verbunden ist, **gekennzeichnet durch**
- eine Induktivität (112), die in den Sendepfad zwischen der abstimmbaren Bank (106) und dem Senderanschluss (124) geschaltet ist, und
- eine Vorrichtung (108), die so konfiguriert ist, dass sie im Rx-Modus die Induktivität (112) mit Masse verbindet und im Tx-Modus die Induktivität (112) von Masse trennt.

2. TMN (122) nach Anspruch 1, wobei:
die Induktivität (112) die einzige im TMN (122) enthaltene Induktivität ist.

3. TMN (122) nach Anspruch 1 oder 2, wobei:
die abstimmbare Bank (106) aus dem mindestens einen abstimmbaren Kondensator (106a, 106b) besteht.

4. TMN (122) nach einem der vorhergehenden Ansprüche, wobei:
die abstimmbare Bank (106) aus einem abstimmbaren Reihenkondensator (106a) und einem abstimmbaren Nebenschlusskondensator (106b) besteht.

5. TMN (122) nach Anspruch 4, wobei:
der abstimmbare Reihenkondensator (106a) mit dem Antennenanschluss (118) verbunden ist, und der abstimmbare Nebenschlusskondensator (106b) mit Masse verbunden ist und hinter dem abstimmbaren Reihenkondensator (106a) angeordnet ist.

6. TMN (122) nach Anspruch 4 oder 5, wobei:
der abstimmbare Reihenkondensator (106a) und der abstimmbare Nebenschlusskondensator (106b) so ausgebildet sind, dass sie unabhängig voneinander abstimmbar sind.

7. TMN (122) nach einem der vorhergehenden Ansprüche, wobei:
die Vorrichtung (108) außerhalb des Sendepfads bzw. des Empfangspfads liegt.

8. TMN (122) nach einem der vorhergehenden Ansprüche, das so ausgebildet ist, dass:
die Vorrichtung (108) im Tx-Modus eine Randkapazität (110) zwischen Masse und der Induktivität (112) bereitstellt.

9. TMN (122) nach einem der vorhergehenden Ansprüche, wobei:
die Vorrichtung (108) aus einer der folgenden Komponenten besteht:
- einem Schalter (108a), der so ausgebildet ist, dass er die Induktivität (112) im Rx-Modus mit Masse verbindet;
- einer Kapazität (108b) zur Realisierung eines Sperrfilters im Rx-Modus;
- einem Symmetrierglied (108c) mit einer Kapazität zur Realisierung eines Sperrfilters im Rx-Modus.

10. TMN (122) nach einem der vorhergehenden Ansprüche, wobei:
die Induktivität (112) zwischen dem Empfängeranschluss (126) und dem Senderanschluss (124) angeschlossen ist.

11. Transceiver-Frontend (120), das Folgendes umfasst:
- ein TMN (122) nach einem der Ansprüche 1 bis 10,
- einen Empfänger (104), der mit dem Empfängeranschluss des TMN (126) verbunden ist, und
- einen Sender (102), der mit dem Senderanschluss des TMN (124) verbunden ist.

12. Transceiver-Frontend (120) nach Anspruch 11, das so ausgebildet ist, dass:
im Tx-Modus die Vorrichtung (108) ausgeschaltet ist, der Sender (102) eingeschaltet ist und der Empfänger (104) ausgeschaltet ist; und
im Rx-Modus die Vorrichtung (108) eingeschaltet ist, der Sender (102) ausgeschaltet ist und der Empfänger (104) eingeschaltet ist.

13. Transceiver-Frontend (120) nach Anspruch 11 oder 12, wobei:
der Sender (102), der Empfänger (104) und das TMN (122) auf einem integrierten Schaltungschip vorgesehen sind, der über den Antennenanschluss des TMN (118) mit einer Antenne (114) verbunden werden kann.

14. Transceiver (100), der Folgendes umfasst:
ein Transceiver-Frontend (120) nach einem der Ansprüche 11 bis 13, und
eine Antenne (114), die über den Antennenanschluss des TMN (118) mit dem Transceiver-Frontend (120) verbunden ist.

15. Verfahren (800) zum Betreiben eines abstimmbaren Anpassungsnetzwerks (TMN) (122) für einen Transceiver, wobei das Verfahren (800) die folgenden Schritte umfasst:
- Bereitstellen (802) von Signalen über einen Empfangspfad des TMN von einem Antennenanschluss (118) an einen Empfängeranschluss (126) während eines Empfangsmodus (Rx),
- Bereitstellen (804) von Signalen über einen Sendepfad des TMN von einem Senderanschluss (124) an den Antennenanschluss (118) während eines Sendemodus (Tx),
- Abstimmen (806) mindestens eines abstimmbaren Kondensators (106a, 106b) einer abstimmbaren Bank (106) des TMN (122), der mit dem Antennenanschluss (118) in einem gemeinsamen Teil des Empfangspfads und des Sendepfads verbunden ist, und
- Betreiben (808) einer Vorrichtung (108) zum selektiven Verbinden einer Induktivität (112), die im Sendepfad zwischen der abstimmbaren Bank (106) und dem Senderanschluss (124) angeschlossen ist, mit Masse im Rx-Modus und Trennen der Induktivität (112) von Masse im Tx-Modus.

## Revendications

1. Réseau d'adaptation accordable, TMN (122), destiné à un émetteur-récepteur, le TMN (122) comprenant :
- un port d'antenne (118) destiné à se connecter à une antenne (114), un port récepteur (126) destiné à se connecter à un récepteur (104) et un port émetteur (124) destiné à se connecter à un émetteur (102),
- un trajet de réception destiné à fournir des signaux du port d'antenne (118) au port récepteur (126) pendant un mode de réception, Rx,
- un trajet d'émission destiné à fournir des signaux du port émetteur (124) au port d'antenne (118) pendant un mode d'émission, Tx, et
- un bloc accordable (106) comprenant au moins un condensateur accordable (106a, 106b) et étant connecté au port d'antenne (118) dans une partie partagée du trajet de réception et du trajet d'émission, **caractérisé par** :
- une inductance (112) connectée dans le trajet d'émission entre le bloc accordable (106) et le port émetteur (124), et
- un dispositif (108) configuré pour connecter l'inductance (112) à la terre dans le mode Rx et pour déconnecter l'inductance (112) de la terre dans le mode Tx.

2. TMN (122) selon la revendication 1, dans lequel :
l'inductance (112) est la seule inductance incluse dans le TMN (122).

3. TMN (122) selon la revendication 1 ou 2, dans lequel :
le bloc accordable (106) se compose de l'au moins un condensateur accordable (106a, 106b).

4. TMN (122) selon l'une quelconque des revendications précédentes, dans lequel :
le bloc accordable (106) se compose d'un condensateur en série accordable (106a) et d'un condensateur en dérivation accordable (106b).

5. TMN (122) selon la revendication 4, dans lequel :
le condensateur en série accordable (106a) est connecté au port d'antenne (118), et
le condensateur en dérivation accordable (106b) est connecté à la terre et est agencé après le condensateur en série accordable (106a).

6. TMN (122) selon la revendication 4 ou 5, dans lequel :
le condensateur en série accordable (106a) et le condensateur en dérivation accordable (106b) sont configurés pour être accordables indépendamment l'un de l'autre.

7. TMN (122) selon l'une quelconque des revendications précédentes, dans lequel :
le dispositif (108) est situé à l'extérieur du trajet d'émission et du trajet de réception, respectivement.

8. TMN (122) selon l'une quelconque des revendications précédentes, configuré de sorte que :
dans le mode Tx, le dispositif (108) fournit une capacitance de frange (110) entre la terre et l'inductance (112).

9. TMN (122) selon l'une quelconque des revendications précédentes, dans lequel :
le dispositif (108) est composé d'au moins un élément parmi :
- un commutateur (108a) configuré pour connecter l'inductance (112) à la terre dans le mode Rx ;
- une capacitance (108b) pour réaliser un filtre coupe-bande dans le mode Rx ;
- un symétriseur (108c) ayant une capacitance, pour réaliser un filtre coupe-bande dans le mode Rx.

10. TMN (122) selon l'une quelconque des revendications précédentes, dans lequel :
l'inductance (112) est connectée entre le port récepteur (126) et le port émetteur (124).

11. Extrémité frontale de l'émetteur-récepteur (120), comprenant :
- un TMN (122) selon l'une quelconque des revendications 1 à 10,
- un récepteur (104) connecté au port récepteur du TMN (126), et
- un émetteur (102) connecté au port émetteur du TMN (124) .

12. Extrémité frontale de l'émetteur-récepteur (120) selon la revendication 11, configurée de sorte que :
dans le mode Tx, le dispositif (108) est éteint, l'émetteur (102) est allumé, et le récepteur (104) est éteint ; et
dans le mode Rx, le dispositif (108) est allumé, l'émetteur (102) est éteint, et le récepteur (104) est allumé.

13. Extrémité frontale de l'émetteur-récepteur (120) selon la revendication 11 ou 12, dans lequel :
l'émetteur (102), le récepteur (104) et le TMN (122) sont fournis sur une puce de circuit intégré connectable à une antenne (114) par le biais du port d'antenne du TMN (118) .

14. Émetteur-récepteur (100) comprenant :
une extrémité frontale d'émetteur-récepteur (120) selon l'une quelconque des revendications 11 à 13, et
une antenne (114) connectée à l'extrémité frontale de l'émetteur-récepteur (120) par le biais du port d'antenne du TMN (118).

15. Procédé (800) servant à faire fonctionner un réseau d'adaptation accordable, TMN (122), destiné à un émetteur-récepteur, le procédé (800) comprenant les étapes consistant à :
- fournir (802) des signaux sur un trajet de réception du TMN d'un port d'antenne (118) à un port récepteur (126) pendant un mode de réception, Rx,
- fournir (804) des signaux sur un trajet d'émission du TMN d'un port émetteur (124) au port d'antenne (118) pendant un mode d'émission, Tx,
- syntoniser (806) au moins un condensateur accordable (106a, 106b) d'un bloc accordable (106) du TMN (122), qui est connecté au port d'antenne (118) dans une partie partagée du trajet de réception et du trajet d'émission, et
- faire fonctionner (808) un dispositif (108) pour connecter de manière sélective une inductance (112), qui est connectée dans le trajet d'émission entre le bloc accordable (106) et le port émetteur (124), à la terre dans le mode Rx, et déconnecter l'inductance (112) de la terre dans le mode Tx.
